# FASCICULE DE BREVET EUROPEEN

(11) **EP 2 578 869 B1**
(45) Date de publication et mention de la délivrance du brevet: **18.10.2017**
(21) Numéro de dépôt: 12178414.4
(22) Date de dépôt: 30.07.2012
(51) Int. Cl.: F02N 11/08, H01F 38/00, H02P 1/04, H03H 7/09, F02D 41/14

(54) **Circuit de démarreur de véhicule automobile comportant un dispositif de rehaussement de tension et démarreur équipé**
Anlasserschaltkreis eines Kraftfahrzeugs, der eine Vorrichtung zur Spannungserhöhung umfasst, und damit ausgestatteter Anlasser
Starter circuit for a motor vehicle comprising a device for stepping up the battery voltage and starter so equipped

(30) Priorité: 07.10.2011 FR 1159057
(43) Date de publication de la demande: 10.04.2013
(73) Titulaire: VALEO EQUIPEMENTS ELECTRIQUES MOTEUR, 94046 Créteil (FR)
(72) Inventeur: LABBE, Nicolas, 69003 LYON (FR)

(56) Documents cités:
- EP-A1- 2 233 732
- WO-A1-2005/076293
- US-A1- 2002 023 605

## Description

De manière générale, l'invention concerne le domaine des démarreurs pour moteur thermique dans les véhicules automobiles. Plus particulièrement, l'invention concerne la combinaison d'un démarreur et d'un dispositif autorisant un rehaussement de la tension aux bornes de la batterie du véhicule lors de la mise sous tension du démarreur.

Lors de la mise sous tension d'un démarreur pour assurer le démarrage du moteur thermique du véhicule, il se produit un appel de courant important qui est proche du niveau de courant de court-circuit du démarreur, à savoir, un courant de l'ordre de 1000 A. Cet appel de courant à la mise sous tension du démarreur décroît ensuite en intensité à mesure que l'induit du démarreur, correspondant au rotor de la machine, monte en vitesse.

A ce pic initial de courant correspond une chute conséquente de la tension aux bornes de la batterie. D'autres chutes de tension moins importantes se produisent ensuite pendant la phase de démarrage et correspondent à des passages par des points morts hauts successifs du moteur thermique.

Le développement de démarreurs dits « renforcés » adaptés pour des systèmes d'arrêt/relance automatique du moteur thermique (systèmes dits « Stop/Start » ou « Stop & Go » en terminologie anglaise) imposent aujourd'hui de nouvelles contraintes aux équipementiers automobiles, relatives au respect de seuils de tension minima de la batterie lors de l'appel de courant à la mise sous tension du démarreur. Ainsi, dans leurs cahiers de charges, les constructeurs automobiles définissent un premier seuil de tension compris habituellement entre 7 et 9 V en dessous duquel ne doit pas descendre la tension de batterie. Pour les chutes de tension suivantes, correspondant aux points morts hauts du moteur thermique, la tension de batterie doit rester supérieure à un second seuil de tension compris habituellement entre 8 et 9 V. Pendant le démarrage du moteur thermique, la tension du réseau de bord du véhicule reste ainsi à une valeur suffisante pour garantir le fonctionnement attendu des équipements des véhicules.

Les démarreurs renforcés ont généralement une puissance supérieure aux démarreurs classiques de manière à obtenir un démarrage rapide pour davantage de confort des utilisateurs. Il en découle un courant d'appel à la mise sous tension plus élevé et donc une première chute de la tension de batterie qui va au-delà des valeurs habituelles et cela en regard d'exigences élevées. Cela entraîne une réelle difficulté pour le concepteur car il faudrait pour se situer au-dessus en tension de batterie que le démarreur possède des chutes de tension interne si élevées qu'il n'aurait plus alors la puissance nécessaire pour entraîner à vitesse suffisante le moteur thermique à basse température.

Dans la technique antérieure, des solutions ont été proposées au problème exposé ci-dessus. Une première solution connue de l'entité inventive repose sur l'utilisation de convertisseurs électroniques élévateurs de tension afin d'éviter un niveau de tension trop bas sur le réseau de bord. Un inconvénient majeur de ces convertisseurs réside dans les coûts substantiels qu'ils introduisent.

Une autre solution connue propose de commander le démarreur au moyen de deux relais, une temporisation et une résistance de limitation de courant. Dans une première phase de fonctionnement dont la durée est déterminée par la temporisation, une résistance additionnelle est insérée en série dans le circuit de démarrage et limite le pic de courant initial. Dans une seconde phase de fonctionnement, la résistance additionnelle est sortie du circuit de démarrage afin de permettre le passage d'un courant suffisant dans l'induit du démarreur et d'autoriser une montée en vitesse de celui-ci.

Les documents EP2080897A2 et EP2128426A2 décrivent un démarreur du type ci-dessus. Outre l'inconvénient du coût additionnel qu'implique le relais de commande supplémentaire, la temporisation et la résistance de limitation de courant, l'introduction de ce relais supplémentaire, qui comporte des pièces mécaniques mobiles soumises à usure, a un impact négatif sur la tenue du démarreur en termes de nombre de cycles de démarrage que doit pouvoir supporter sans encombre le démarreur. La tenue du démarreur en nombre de cycles de démarrage est une contrainte particulièrement sévère pour les démarreurs destinés à des systèmes Stop/ Start. En effet, il est demandé à de tels démarreurs de tenir environ 300 000 cycles de démarrage, soit dix fois plus que les 30 000 cycles environ demandés aux démarreurs classiques.

Outre les inconvénients exposés ci-dessus, l'utilisation de cette seconde solution de la technique antérieure peut s'avérer inadaptée lorsque la satisfaction à un gabarit de tension contraignant en termes de temps est demandée par le constructeur automobile. Un tel gabarit comporte généralement un palier bas de tension correspondant au premier seuil de tension indiqué ci-dessus et un palier haut de tension correspondant au second seuil de tension. Une rampe de tension montante est également prévue dans le gabarit entre le palier bas et le palier haut.

Les essais réalisés par l'entité inventive, avec les valeurs usuelles des constructeurs pour la durée du palier bas et la pente de la rampe du gabarit, montrent la difficulté qu'il y a avec cette seconde solution de la technique antérieure de rester dans le gabarit. En effet, il a été constaté un risque de franchissement du gabarit au niveau de sa rampe de tension lorsque la tension de batterie, après s'être redressée une fois le pic initial de courant absorbé, chute à nouveau à la fin de la temporisation, le courant traversant l'induit du démarreur augmentant alors sensiblement du fait la sortie de la résistance de limitation de courant du circuit de démarrage. Après ce franchissement, la tension de batterie peut rester sous le gabarit pendant une certaine durée et ne revenir au-dessus du gabarit qu'après la fin de la rampe de tension montante, alors que l'instant de début du palier haut de tension a déjà été atteint.

Dans le but de supprimer les inconvénients indiqués ci-dessus, l'entité inventive a déjà proposé des perfectionnements aux démarreurs existants de la technique antérieure, notamment pour les applications dans des véhicules automobiles de la fonction d'arrêt/ relance automatique du moteur thermique.

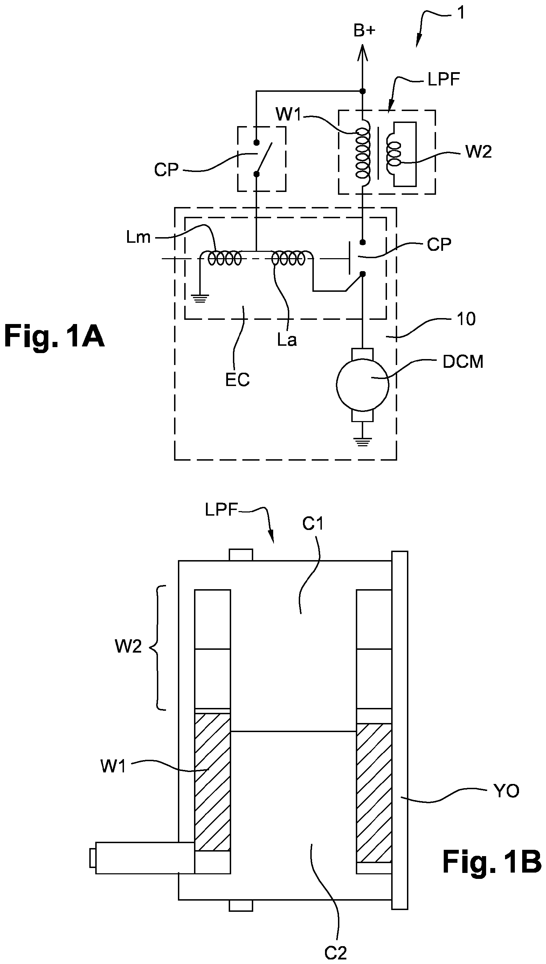

Ces perfectionnements ont consisté, de manière générale, à monter un dispositif de filtrage de type inductif en série avec le moteur électrique dans le circuit de puissance du démarreur, de façon à empêcher une chute de la tension de batterie consécutive à un pic de courant produit par la mise en service du moteur électrique, comme par exemple dans la publication de demande de brevet US2002/0023605 A1. L'entité inventive a proposé une forme de réalisation du dispositif de filtrage, telle que celle montrée aux Figures 1A et 1B sous la forme d'un transformateur cuirassé (LPF) monté au plus près d'une borne (B+) de la batterie du véhicule.

On notera que l'entité inventive a déposé le 15 novembre 2011 une demande PCT/FR2011/052638.

De nouvelles études menées récemment par l'entité inventive ont permis d'optimiser encore davantage les formes de réalisation de ces perfectionnements.

Selon un premier aspect, l'invention concerne une combinaison dans un circuit électrique de démarrage pour véhicule automobile comprenant un démarreur et un dispositif de rehaussement de tension de batterie, le démarreur comprenant un moteur électrique et un contacteur électromagnétique, le dispositif de rehaussement de tension de batterie étant destiné à empêcher une chute de la tension de batterie consécutive à un pic de courant produit par la mise en service dans un circuit de puissance du démarreur. Conformément à l'invention, le dispositif de rehaussement de tension de batterie comprend un transformateur ayant un circuit d'enroulement primaire qui est monté en série dans le circuit de puissance et est directement connecté à une borne de la batterie du véhicule et au plus près de celle-ci, et qui comprend au moins un circuit d'enroulement secondaire en court-circuit et une carcasse magnétique formée par empilement de tôles en matériau ferreux.

Selon une forme de réalisation particulière, le matériau ferreux des tôles est un acier de type FeSi.

Selon une autre forme de réalisation particulière, le matériau ferreux des tôles est un acier FeNi ou FeCo.

La carcasse magnétique peut avoir une section de forme sensiblement carrée ou rectangulaire.

Selon encore une autre forme de réalisation particulière, la carcasse magnétique est formée par empilement de tôles disposées en gradins et a une section de forme sensiblement circulaire ou demi-circulaire.

Selon les applications de l'invention, la carcasse magnétique comporte des tôles en U, L ou I, ou bien en E.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.
La **Figure 1A** montre sous la forme d'un schéma de principe un circuit électrique de démarreur intégrant le dispositif de filtrage de type inductif du genre mis au point antérieurement par l'entité inventive.
La **Figure 1B** est une vue en coupe axiale d'un dispositif de filtrage de type inductif, sous la forme d'un transformateur cuirassé du genre mis au point antérieurement par l'entité inventive.

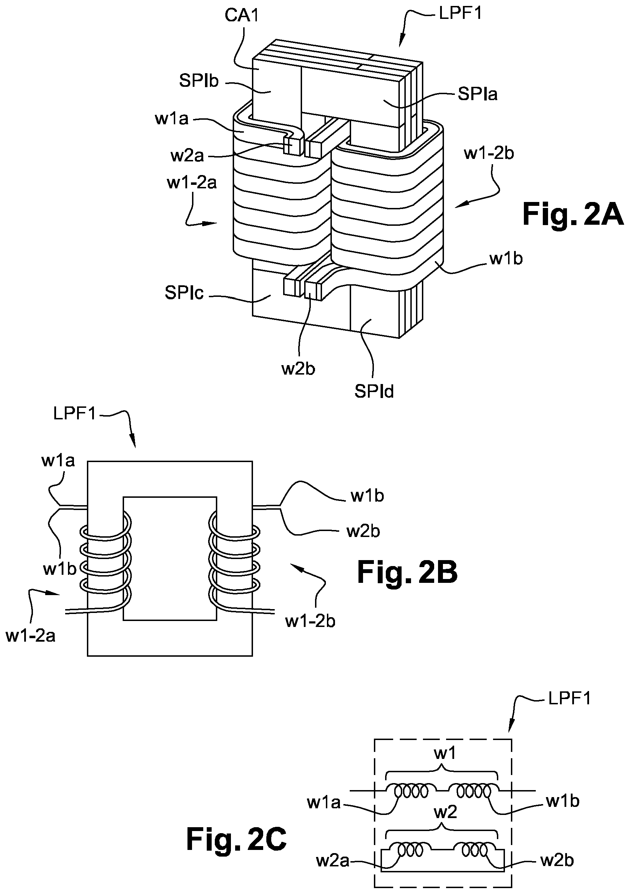

Les **Figures 2A** à **2C** montrent une première forme de réalisation du dispositif de filtrage selon l'invention. La **Figure 2A** est une vue en perspective de cette première forme de réalisation. Les **Figures 2B** et **2C** sont respectivement une vue de principe montrant une configuration de circuits d'enroulement montés dans cette première forme de réalisation et un schéma électrique correspondant montrant la manière dont sont connectés électriquement ces circuits d'enroulement.

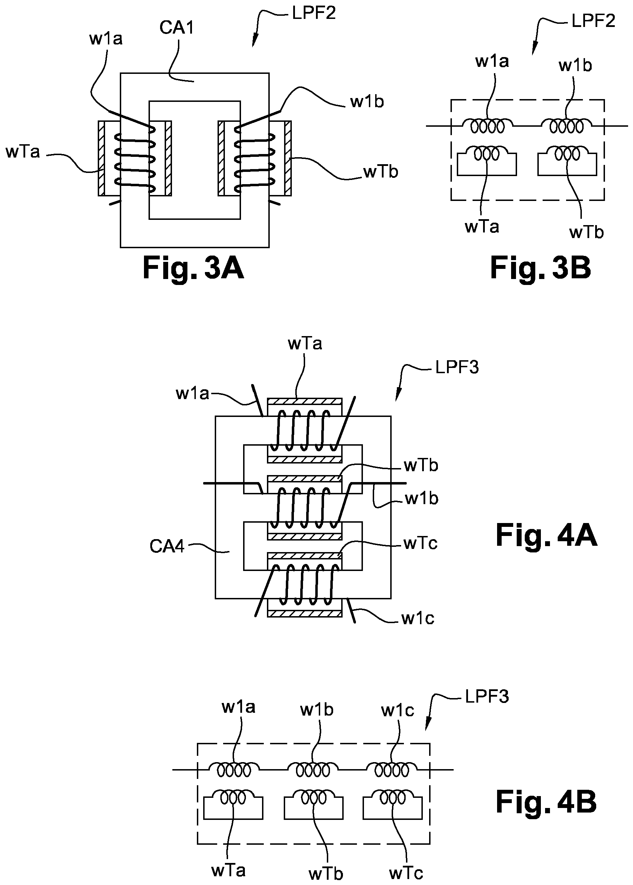

Les **Figures 3A** et **3B** montrent une seconde forme de réalisation du dispositif de filtrage selon l'invention. Les **Figures 3B** et **3B** sont respectivement une vue de principe montrant une configuration de circuits d'enroulement montés dans cette seconde forme de réalisation et un schéma électrique correspondant montrant la manière dont sont connectés électriquement ces circuits d'enroulement.
Les **Figures 4A** et **4B** montrent une troisième forme de réalisation du dispositif de filtrage selon l'invention. Les **Figures 4B** et **4B** sont respectivement une vue de principe montrant une configuration de circuits d'enroulement montés dans cette troisième forme de réalisation et un schéma électrique correspondant montrant la manière dont sont connectés électriquement ces circuits d'enroulement.

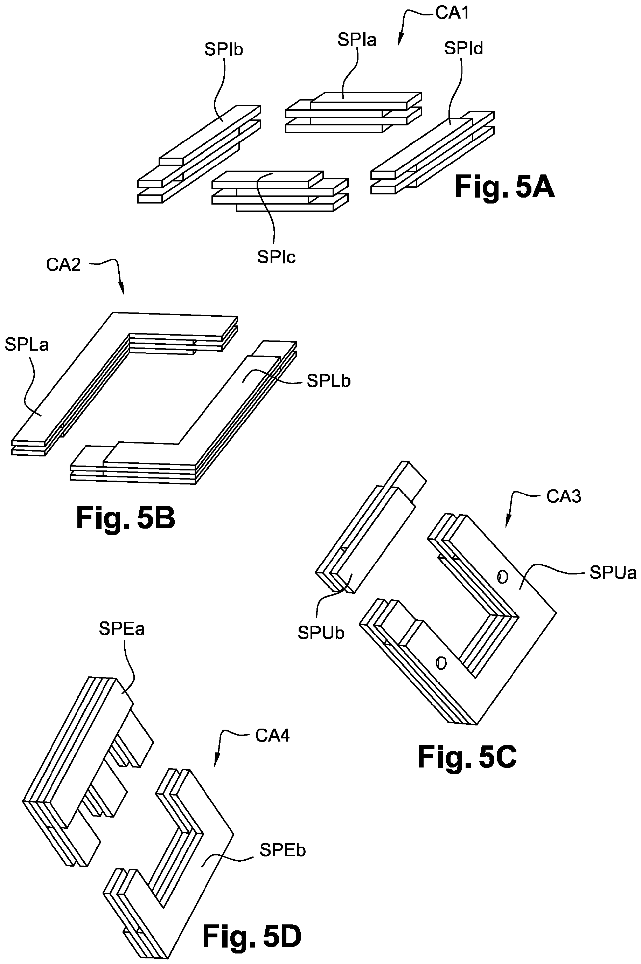

Les **Figures 5A** à **5D** montrent quatre assemblages de tôles en U, I, L et E utilisables dans différentes formes de réalisation pour former le circuit magnétique du dispositif de filtrage selon l'invention.

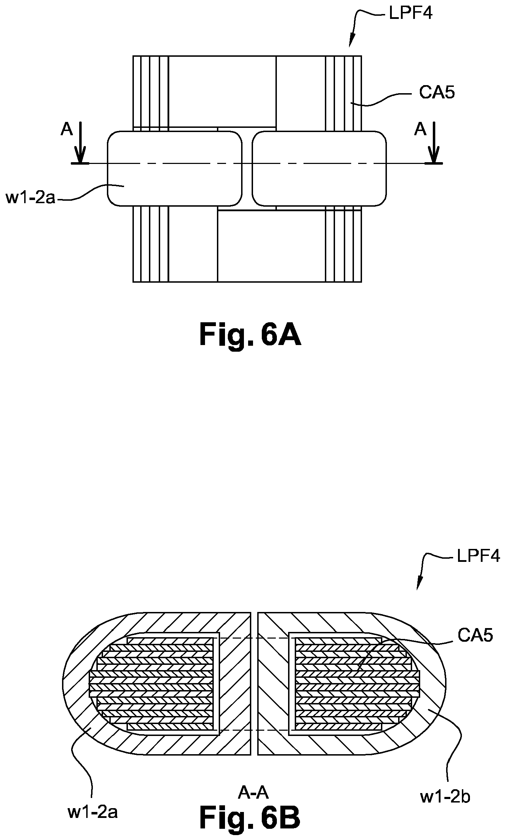

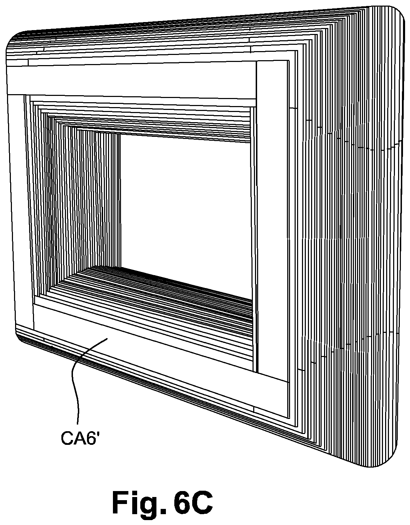

Les **Figures 6A, 6B** et **6C** montrent des formes de réalisation du dispositif de filtrage selon l'invention avec des carcasses obtenues par empilements de tôles en gradins. Les **Figures 6A** et **6B** sont des vues simplifiées de face et en coupe, selon un plan de coupe AA, d'une forme de réalisation avec une section de carcasse sensiblement demi-circulaire. La **Figure 6C** est une vue en perspective d'une réalisation pratique d'une carcasse obtenue par empilements de tôles en gradins ayant une section sensiblement circulaire.

En référence à la Figure 1A, le circuit électrique 1 de démarreur comporte un circuit de puissance qui est formé par le montage série d'un dispositif de filtrage LPF, d'un moteur électrique DCM et d'un contact de puissance CP. Ce contact de puissance CP est celui d'un contacteur électromagnétique EC du démarreur 10. Le contacteur électromagnétique EC et le moteur électrique à courant continu DCM font partie de manière classique d'un démarreur de véhicule automobile. Dans cette forme de réalisation mis au point antérieurement par l'entité inventive, le dispositif de filtrage LPF est inséré dans le circuit de puissance au plus près de la batterie du véhicule, entre la borne positive B+ de celle-ci et le contacteur électromagnétique EC du démarreur 10.

Le contacteur EC est ici un contacteur classique de démarreur, à simple contact, et comprend un solénoïde formé d'une bobine d'appel La et d'une bobine de maintien Lm.

La fermeture d'un contact de démarrage CS du véhicule commande l'excitation des bobines d'appel et de maintien, et l'activation du démarreur selon un séquencement bien connu de l'homme du métier et qui ne sera pas détaillé ici.

Le fort pic initial de courant mentionné plus haut intervient à la fermeture du contact de puissance CP, lorsque le moteur DCM est alimenté à pleine puissance. La fermeture du contact de puissance CP provoque également la circulation dans le dispositif de filtrage LPF d'un courant de puissance alimentant le moteur DCM.

Le dispositif de filtrage LPF est un dispositif de type inductif qui est réalisé sous la forme d'un transformateur ayant des circuits d'enroulement primaire W1 et secondaire W2. Le circuit d'enroulement primaire W1 est celui qui est inséré dans le circuit de puissance du démarreur. Le circuit d'enroulement secondaire W2 est court-circuité.

Typiquement, l'inductance équivalente du dispositif de filtrage inductif LPF est comprise entre 0,1 et 10 mH environ pour des courants ayant un ordre de grandeur de 300 à 1000 A.

L'effet de rehaussement de la tension de batterie obtenu découle du fait qu'à la mise sous tension du moteur DCM, le pic initial de courant est coupé (atténué d'environ la moitié) en raison de la production de forts courants induits dans le circuit secondaire W2 court-circuité, qui s'opposent à la brutale variation de flux magnétique qui les génère.

Comme montré à la Figure 1B, le dispositif de filtrage LPF est réalisé ici sous la forme d'un transformateur cuirassé du genre mis au point antérieurement par l'entité inventive.

Le dispositif de filtrage LPF comprend une carcasse C1, C2, YO en matériau magnétique tel que l'acier, et les circuits d'enroulement primaire W1 et secondaire W2 qui sont ici en cuivre. La carcasse comprend une culasse cylindrique YO et deux pièces de noyau axial C1, C2 autour desquelles sont agencés les circuits d'enroulement W1, W2. Le circuit d'enroulement primaire W1 est ici formé de deux conducteurs méplats, parallèles et jointifs. Le circuit d'enroulement secondaire W2 court-circuité est formé de deux bagues en cuivre superposées et insérées dans le noyau axial.

En référence aux **Figures 2A** à **2C****,** il est maintenant décrit une première forme de réalisation LPF1 du dispositif de filtrage optimisé selon l'invention.

Comme montré aux **Figures 2A** et **2B****,** le dispositif LPF1 selon cette première forme de réalisation comporte essentiellement une carcasse CA1 en matériau magnétique ferreux, en forme de cadre, et des bobines de fils conducteurs W1-2a et W1-2b.

La carcasse CA1 est réalisée par empilement de tôles. Concrètement, la carcasse CA1 en forme de cadre est formée par association de quatre empilements de tôles SPIa à SPId en forme de I tels que montrés à la **Figure 5A****.** Les quatre empilements de tôles SPIa à SPId ont des configurations identiques et ne diffèrent dans le cadre de carcasse que par leur orientation. Un seul type de tôle est nécessaire pour réaliser l'ensemble du cadre. Dans cet exemple de réalisation, les empilements en I comportent chacun quatre tôles identiques, disposées en décalage longitudinal entre tôles jointives de manière à permettre une imbrication des extrémités de tôles au niveau des angles du cadre.

Les essais réalisés par l'entité inventive ont montré que la carcasse magnétique CA1 est bien adaptée pour des tôles en matériau anisotrope. L'acier électrique conventionnel Fer-Silicium (FeSi) à grains orientés (GO) ou non-orientés (NO) donne de bons résultats. Cependant, les aciers spéciaux Fer-Nickel (FeNi) et Fer-Cobalt (FeCo) pourront également convenir dans certaines applications.

Typiquement, dans cette forme de réalisation de la carcasse magnétique ainsi que les autres formes décrites par la suite, les tôles sont maintenues entre-elles par collage, rivetage, poinçonnage, soudure, cerclage ou surmoulage dans de la résine. L'assemblage de la carcasse magnétique devra être effectué avec le plus grand soin de manière à éviter tout entrefer non voulu au niveau des extrémités de tôle en recouvrement.

Typiquement, les bobines W1-2a et W1-2b sont faites à partir de fils de cuivre émaillé, c'est-à-dire, isolés électriquement par vernis, offrant une faible résistance électrique et une bonne isolation électrique entre spires jointives. En variante, du fil d'aluminium oxydé en surface pourra être utilisé dans certaines formes de réalisation pour ces bobines.

Dans cette forme de réalisation, les bobines W1-2a et W1-2b sont insérées respectivement dans les empilements parallèles SPIb, SPId, du cadre formant la carcasse CA1.

Dans cette forme de réalisation, les bobines W1-2a, W1-2b sont formées chacune de deux conducteurs méplats, parallèles et jointifs (conducteurs w1 a, w2a pour W1-2a et w1b, w2b pour W1-2b, visibles à la **Figure 2A**). Un isolant de bobine (non représenté dans les figures) est généralement inséré entre les conducteurs w1 a, w1 b et la carcasse CA1, de manière à protéger ces conducteurs d'un court-circuit en cas de détérioration du vernis isolant à la surface des conducteurs.

Les conducteurs w1 a, w2a sont bobinés les deux conducteurs en main sur une seule couche de manière à former la bobine W1-2a. La bobine W1-2b est formée comme W1-2a, en bobinant les deux conducteurs en main w1b, w2b sur une seule couche.

Comme montré à la **Figure 2C****,** le circuit d'enroulement primaire W1 du dispositif LPF1 est formé par la connexion en série des deux portions d'enroulement réalisées avec les conducteurs w1a et w1b dans les bobines W1-2a et W1-2b. Le circuit d'enroulement secondaire W2 du dispositif LPF1 est formé par la connexion en série des deux portions d'enroulement réalisées avec les conducteurs w2a et w2b dans les bobines W1-2a et W1-2b et par la mise en court-circuit du circuit d'enroulement ainsi constitué.

On notera, en variantes de réalisation, que les bobines W1-2a et W1-2b pourront être formées d'un nombre de conducteurs méplats supérieur à deux. Le choix du nombre de conducteurs peut être dicté par une contrainte de courbure importante ou par la nécessité de limiter l'influence de l'effet de peau.

De plus, dans certaines variantes, les bobines W1-2a et W1-2b pourront être formées en un nombre de couches supérieur à deux.

Les essais réalisés par l'entité inventive ont mis en évidence le fait qu'il est souvent préférable du point de vu thermique que la ou les couches du circuit d'enroulement secondaire W2 soient situées sur la partie extérieure des bobines W1-2a, W1-2b. Cependant, dans certaines applications, une disposition du circuit d'enroulement secondaire W2 dans la partie intérieure des bobines W1-2a, W1-2b peut s'avérer être le meilleur compromis.

On notera également que la carcasse magnétique CA1 peut, selon les applications du dispositif de filtrage selon l'invention, être réalisée de manière différente, comme montré aux **Figures 5B** et **5C****.** Selon le cas, des tôles en matériau anisotrope ou isotrope pourront être utilisées. L'acier électrique conventionnel Fer-Silicium (FeSi) à grains orientés (GO) ou non-orientés (NO), selon le cas, donne de bons résultats. Cependant, les aciers spéciaux Fer-Nickel (Fe-Ni) et Fer-Cobalt (FeCo) pourront aussi être utilisés dans certaines applications.

A la **Figure 5B****,** une carcasse magnétique CA2 en forme de cadre est formée par association réalisée à partir de deux empilements de tôles SPLa et SPLb, en forme de L. Deux types de tôles sont nécessaires pour réaliser l'ensemble du cadre. Dans cet exemple, chaque empilement en L comprend deux tôles d'un premier type et deux tôles d'un second type, soit quatre tôles au total. Les tôles du second type ont des petite et grande longueurs du L inférieures à celles des tôles du premier type. L'empilement SPLa, SPLb, est réalisé en disposant en alternance les premier et second types de tôles. L'assemblage des extrémités des empilements de tôles SPLa, SPLb est fait de manière imbriquée, les extrémités des tôles des empilements SPLa, SPLb se recouvrant alternativement l'une l'autre.

A la **Figure 5C****,** une carcasse magnétique CA3 également en forme de cadre est formée par association d'un empilement de tôles SPUa en forme de U et d'un empilement de tôles SPUb en forme de I. Deux types de tôles sont nécessaires pour réaliser l'ensemble du cadre. Dans cet exemple, l'empilement en I comporte trois tôles identiques dont une centrale qui est décalée longitudinalement, et l'empilement en U comporte également trois tôles identiques avec des branches parallèles formant le U de longueur différente. Une tôle centrale de l'empilement en U est disposée en étant pivotée de 180° par rapport aux deux tôles adjacentes. La disposition des tôles I et U décrite ci-dessus et les longueurs différentes des branches du U permettent l'imbrication des extrémités de tôles du cadre.

Une seconde forme de réalisation LPF2 du dispositif de filtrage selon l'invention est montrée aux **Figures 3A** et **3B****.**

Le dispositif de filtrage LPF2 comporte, comme LPF1, deux bobines montées sur une carcasse magnétique CA1 en forme de cadre. Le dispositif de filtrage LPF2 se distingue de LPF1 essentiellement par des circuits d'enroulement secondaire WTa et WTb court-circuités qui sont réalisés respectivement au moyen de deux tubes. Ces tubes sont réalisés dans un matériau conducteur électrique, typiquement l'aluminium. De plus, comme montré à la **Figure 3B****,** le dispositif de filtrage LPF2 comporte un circuit d'enroulement primaire W1 qui est formé par la connexion en série de deux bobines W1 a et W1 b.

Une troisième forme de réalisation LPF3 du dispositif de filtrage selon l'invention est montrée aux **Figures 4A** et **4B****.**

Le dispositif de filtrage LPF3 se distingue de LPF2 essentiellement par le fait qu'il comporte trois bobines montées sur une carcasse magnétique CA4 formant un double cadre. Le dispositif de filtrage LPF3 comporte des circuits d'enroulement secondaire WTa, WTb et WTc court-circuités qui sont réalisés respectivement au moyen de trois tubes en aluminium, de manière analogue à LPF3. De plus, comme montré à la **Figure 4B****,** le dispositif de filtrage LPF3 comporte un circuit d'enroulement primaire W1 qui est formé par la connexion en série de trois bobines W1 a, W1 b et W1 c.

La carcasse magnétique CA4 du dispositif LPF3 est formée de deux empilements de tôles SPEa et SPEb comme montrés à la **Figure 5D****.** Chaque empilement SPEa, SPEb comporte deux tôles en E et deux tôles en I, disposées alternativement. Les tôles E et I sont disposées dans les empilements de telle manière à assurer un recouvrement des tôles entre elles au niveau de leurs extrémités, comme déjà décrit plus haut. Les tôles en I autorisent une fermeture des ouvertures des tôles en E de manière à former le double cadre de la carcasse CA4. L'alliage ferreux FeSi pourra être utilisé pour ces tôles, mais non exclusivement.

Dans les formes de réalisation LPF1 à LPF3, les carcasses magnétiques en tôles empilées CA1 à CA4 telles que décrites permettent d'obtenir une section de noyau magnétique de forme carrée ou rectangulaire.

Dans la forme de réalisation LPF4 du dispositif de filtrage selon l'invention qui est maintenant décrite en référence aux **Figures 6A** et **6B****,** la carcasse magnétique CA5 a une section de forme sensiblement demi-circulaire. Cette section demi-circulaire autorise une optimisation des enroulements de conducteurs autour du noyau magnétique. Il en découle une plus grande compacité du dispositif ainsi qu'une réduction des résistances électriques des bobinages due à une longueur moindre des conducteurs.

Comme cela apparaît à la **Figure 6B****,** la forme sensiblement demi-circulaire de la section de la carcasse CA5 est ici obtenue par des empilements des tôles en gradins. Différentes largeurs de tôle seront donc nécessaires pour réaliser ces empilements en gradins.

Comme montré à la **Figure 6C****,** en variante de réalisation, une carcasse CA5' ayant une section de forme sensiblement circulaire peut également être obtenue par empilements des tôles en gradins.

Dans la forme de réalisation LPF4, les bobines W1-2a et W1-2b sont réalisées de manière similaire à celles de LPF1, de façon à obtenir les circuits d'enroulement primaire W1 et secondaire W2.

Les essais comparatifs réalisés par l'entité inventive entre le dispositif de filtrage selon l'invention et un dispositif de filtrage à transformateur cuirassé du type montré à la **Figure 1B** ont montrés que l'invention permet une diminution du flux magnétique de fuite du dispositif ainsi qu'un meilleur couplage magnétique entre les enroulements primaire et secondaire. De plus, l'invention permet de retarder l'apparition du phénomène de saturation magnétique dans le dispositif de filtrage. Ainsi, par exemple, pour un dispositif de filtrage selon l'invention et un dispositif de filtrage à transformateur cuirassé ayant tout deux une même section fer S_{Fer} = 314 mm² pour le noyau magnétique et un même nombre de spires n1=n2 = 18 spires pour les enroulements primaire et secondaire, la saturation magnétique apparaît au bout de 3 ms et 2,6 ms, respectivement.

## Revendications

1. Circuit électrique de démarrage pour véhicule automobile comprenant un démarreur (DCM, EC) et un dispositif de rehaussement de tension de batterie, ledit démarreur (DCM, EC) comprenant un moteur électrique (DCM) et un contacteur électromagnétique (EC), ledit dispositif de rehaussement de tension de batterie étant destiné à empêcher une chute de la tension de batterie (Vbat) consécutive à un pic de courant produit par la mise en service dans un circuit de puissance dudit démarreur (DCM, EC), **caractérisée en ce que** ledit dispositif de rehaussement de tension de batterie comprend un transformateur (LPF1 à LPF4) ayant un circuit d'enroulement primaire (W1) qui est monté en série dans ledit circuit de puissance et est directement connecté à une borne (B+) de la batterie du véhicule et au plus près de celle-ci, et qui comprend au moins un circuit d'enroulement secondaire (W2) en court-circuit et une carcasse magnétique (CA1 à CA5, CA5') formée par empilement de tôles en matériau ferreux.

2. Circuit selon la revendication 1, **caractérisée en ce que** ledit matériau ferreux des tôles est un acier de type FeSi.

3. Circuit selon la revendication 1, **caractérisée en ce que** ledit matériau ferreux des tôles est un acier FeNi ou FeCo.

4. Circuit selon la revendication 2 ou 3, **caractérisée en ce que** ladite carcasse magnétique a une section de forme sensiblement carrée ou rectangulaire.

5. Circuit selon la revendication 2 ou 3, **caractérisée en ce que** ladite carcasse magnétique est formée par empilement de tôles disposées en gradins et a une section de forme sensiblement circulaire (CA5') ou demi-circulaire (CA5).

6. Circuit selon l'une quelconque des revendications 2 à 5, **caractérisée en ce que** ladite carcasse magnétique comporte des tôles en U, L ou I.

7. Circuit selon l'une quelconque des revendications 2 à 5, **caractérisée en ce que** ladite carcasse magnétique comporte des tôles en E.

## Patentansprüche

1. Elektrischer Anlasserschaltkreis für ein Kraftfahrzeug, umfassend einen Anlasser (DCM, EC) und eine Vorrichtung zur Erhöhung der Batteriespannung, wobei der Anlasser (DCM, EC) einen Elektromotor (DCM) und ein elektromagnetisches Schütz (EC) aufweist, wobei die Vorrichtung zur Erhöhung der Batteriespannung dazu bestimmt ist, einen Abfall der Batteriespannung (Vbat) infolge von einer Stromspitze, die durch die Inbetriebnahme des Anlassers (DCM, EC) in einem Leistungsschaltkreis erzeugt wird, zu verhindern, **dadurch gekennzeichnet, dass** die Vorrichtung zur Erhöhung der Batteriespannung einen Transformator (LPF1 bis LPF4) mit einem Primärwicklungsschaltkreis (W1) aufweist, der in dem Leistungsschaltkreis in Reihe geschaltet ist und direkt an eine Klemme (B+) der Batterie des Kraftfahrzeugs und so nahe wie möglich an dieser angeschlossen ist, und der mindestens einen kurzgeschlossenen Sekundärwicklungsschaltkreis (W2) und ein magnetisches Gehäuse (CA1 bis CA5, CA5') aufweist, das aus einem Stapel aus Blechen aus Eisenmaterial gebildet ist.

2. Schaltkreis nach Anspruch 1, **dadurch gekennzeichnet, dass** das Eisenmaterial der Bleche ein Stahl vom Typ des FeSi-Stahls ist.

3. Schaltkreis nach Anspruch 1, **dadurch gekennzeichnet, dass** das Eisenmaterial der Bleche ein FeNi- oder FeCo-Stahl ist.

4. Schaltkreis nach Anspruch 2 oder 3, **dadurch gekennzeichnet, dass** das magnetische Gehäuse einen Querschnitt von im Wesentlichen quadratischer oder rechteckiger Form aufweist.

5. Schaltkreis nach Anspruch 2 oder 3, **dadurch gekennzeichnet, dass** das magnetische Gehäuse aus einem Stapel aus Blechen, die stufenförmig angeordnet sind, gebildet ist und einen Querschnitt von im Wesentlichen kreisförmiger (CA5') oder halbkreisförmiger (CA5) Form aufweist.

6. Schaltkreis nach einem der Ansprüche 2 bis 5, **dadurch gekennzeichnet, dass** das magnetische Gehäuse U-förmige, L-förmige oder I-förmige Bleche aufweist.

7. Schaltkreis nach einem der Ansprüche 2 bis 5, **dadurch gekennzeichnet, dass** das magnetische Gehäuse E-förmige Bleche aufweist.

## Claims

1. Electric starter circuit for an automotive vehicle comprising a starter (DCM, EC) and a device for stepping up the battery voltage, said starter (DCM, EC) comprising an electric motor (DCM) and an electromagnetic contactor (EC), said device for stepping up the battery voltage being intended to prevent a drop in the battery voltage (Vbat) following a current spike produced by the use of said starter (DCM, EC) in a power circuit, **characterized in that** said device for stepping up the battery voltage comprises a transformer (LPF1 to LPF4) having a primary winding circuit (W1) that is connected in series in said power circuit and is directly connected to a terminal (B+) of the battery of the vehicle and is close as possible thereto, and that comprises at least one secondary winding circuit (W2) connected as a short circuit and a magnetic yoke (CA1 to CA5, CA5') formed by stacking sheets of a ferrous material.

2. Circuit according to Claim 1, **characterized in that** said ferrous material of the sheets is a steel of FeSi type.

3. Circuit according to Claim 1, **characterized in that** said ferrous material of the sheets is a FeNi or FeCo steel.

4. Circuit according to Claim 2 or 3, **characterized in that** said magnetic yoke is substantially square or rectangular in cross section.

5. Circuit according to Claim 2 or 3, **characterized in that** said magnetic yoke is formed by stacking sheets in a terraced arrangement and is substantially circular (CA5') or semicircular (CA5) in cross section.

6. Circuit according to any one of Claims 2 to 5, **characterized in that** said magnetic yoke includes U-, L- or I-shaped sheets.

7. Circuit according to any one of Claims 2 to 5, **characterized in that** said magnetic yoke includes E-shaped sheets.
